**Europäisches Patentamt**

**European Patent Office**

**Office européen des brevets**

(19)

(11) Veröffentlichungsnummer : **0 287 558**
**B1**

(12)
# EUROPÄISCHE PATENTSCHRIFT

(45) Veröffentlichungstag der Patentschrift :
**11.10.89**

(51) Int. Cl.⁴ : **B 60 C 23/04, H 01 H 35/28**

(21) Anmeldenummer : **86906283.6**

(22) Anmeldetag : **05.11.86**

(86) Internationale Anmeldenummer :
**PCT/DE 86/00444**

(87) Internationale Veröffentlichungsnummer :
**WO/8703546 (18.06.87 Gazette 87/13)**

(54) **REIFENDRUCKSENSOR FÜR KRAFTFAHRZEUGE.**

(30) Priorität : **12.12.85 DE 3543864**

(43) Veröffentlichungstag der Anmeldung :
**26.10.88 Patentblatt 88/43**

(45) Bekanntmachung des Hinweises auf die Patenterteilung : **11.10.89 Patentblatt 89/41**

(84) Benannte Vertragsstaaten :
**DE FR GB IT SE**

(56) Entgegenhaltungen :
**DE—C— 3 507 253**
**FR—A— 2 241 420**
**GB—A— 2 016 383**
**US—A— 3 185 785**

(73) Patentinhaber : **ROBERT BOSCH GMBH**
**Postfach 50**
**D-7000 Stuttgart 1 (DE)**

(72) Erfinder : **HAAS, Lothar**
**Kastanienweg 10**
**D-8504 Stein (DE)**
Erfinder : **HETTICH, Gerhard**
**Martin-Renz-Strasse 8**
**D-8501 Dietenhofen (DE)**
Erfinder : **KAMP, Manfred**
**Annette-Kalb-Strasse 8**
**D-8500 Nürnberg (DE)**
Erfinder : **SCHMID, Hans-Dieter**
**Kamenzer Strasse 8**
**D-8500 Nürnberg (DE)**
Erfinder : **SCHRUMPF, Hans**
**Hebelstrasse 5**
**D-8507 Oberasbach (DE)**
Erfinder : **WALTER, Berthold**
**Ahornweg 13**
**D-8507 Oberasbach (DE)**

## Beschreibung

Die Erfindung geht aus von einem Reifendrucksensor für Kraftfahrzeuge nach der Gattung des Hauptanspruches.

Bei einer bekannten Ausführung eines Reifendrucksensors (DE-A 32 43 854) ist eine aus einem Metallgehäuse hergestellte Referenzdruckkammer in einer Gehäusekapsel aus Isolierstoff aufgenommen, die mit einem Gewindeansatz in eine Gewindebohrung der Radfelge einzuschrauben ist. Die Referenzdruckkammer ist vorn zum Reifen hin durch eine Schaltmembran abgeschlossen, die mit einem Kontaktstift in der Referenzdruckkammer sowie mit einem daran angeschlossenen Schwingkreis in der Gehäusekapsel zusammenwirkt. Die Befestigung der Referenzdruckkammer in der Gehäusekapsel erfolgt über eine formschlüssig in die Gehäusekapsel eingesetzte Metallhülse, die mit einem eingewölbten Rand die Referenzdruckkammer im Bereich der Schaltmembran ringförmig einfaßt. Die Gehäusekapsel des Reifendrucksensors soll verhindern, daß bei einer Erhitzung der Radfelge die Wärme auf die Referenzdruckkammer gelangt und das darin eingeschlossene Gas stärker erwärmt als die Druckluft im Reifen.

Die bekannte Lösung hat den Nachteil, daß die aus Isolierstoff hergestellte Gehäusekapsel durch Steinschlag leicht abgeschlagen werden kann, was zu einem schnellen Druckverlust im Reifen und damit zu erhöhtem Risiko führt. Ein weiterer Nachteil besteht darin, daß die Metallhülse in der Gehäusekapsel die Schaltmembran am äußeren Rand einspannt, wodurch an der Schaltmembran Spannungen auftreten können, welche die Schaltgenauigkeit des Reifendrucksensors in unerwünschter Weise beeinträchtigen. Es ist zwar bei einer anderen Schalterausführung des Reifendrucksensors (DE-A 31 08 998) bekannt, die Schaltmembran ohne Verspannungen flach auf den äußeren Rand der Referenzdruckkammer festzuschweißen, dort ist jedoch die metallische Referenzdruckkammer in der aus Isolierstoff hergestellten Gehäusekapsel des Reifendrucksensors nur durch eine Ringwulst gehalten, welche bei Temperaturschwankungen und hohen Drehzahlen den Fliehkräften nicht mehr in ausreichendem Maße standhält. Dort kann sich unter ungünstigen Umständen die Referenzdruckkammer lockern und dann aus der Gehäusekapsel heraus in das Reifeninnere geschleudert werden, was zur Zerstörung des Reifens führen kann.

Mit der vorliegenden Lösung wird angestrebt, eine sichere mechanische Befestigung der Referenzdruckkammer im Gehäuse des Reifendrucksensors bei gleichzeitig guter thermischer Ankopplung an die Luft im Reifen zu erreichen.

Vorteile der Erfindung.

Der erfindungsgemäße Reifendrucksensor mit den kennzeichnenden Merkmalen des Hauptanspruchs hat den Vorteil, daß durch die Verwendung eines metallischen Sensorgehäuses und durch die Einfassung des Kragens der Referenzdruckkammer diese nicht mehr nach vorn oder hinten herausgedrückt werden kann. Außerdem soll das Gehäuse die zur Druckluft im Reifen hin offene Gehäusekammer des Reifendrucksensors nach hinten druckdicht abschließen, um ein Entweichen der Druckluft im Reifen bei Beschädigung des Reifendrucksensors durch Steinschlag zu verhindern. Als weiterer Vorteil ist anzusehen, daß durch die Einfassung des Kragens der Referenzdruckkammer durch den jeweils aus Isolierstoff hergestellten Tragring und Abstandsring eine thermische Entkopplung der Referenzdruckkammer vom metallischen Sensorgehäuse und damit von der Temperatur der Radfelge erreicht wird. Durch den am Außenumfang der Referenzdruckkammer angeformten radialen Kragen wird außerdem gewährleistet, daß die Schaltmembran nicht mehr eingespannt wird und somit von mechanischen Verspannungen freigehalten werden kann, dies führt zu einer erhöhten Genauigkeit bei der Reproduktion des Schaltpunktes.

Durch die in den Unteransprüchen aufgeführten Maßnahmen sind vorteilhafte Weiterbildungen und Verbesserungen der im Hauptanspruch angegebenen Merkmale möglich. Besonders vorteilhaft ist es, wenn der Tragring über einen elastischen Dichtring auf einer im Sensorgehäuse angeformten Ringschulter aufliegt und der Abstandsring mit einer Abdeckscheibe durch einen Bördelrand an der vorderen Öffnung des Sensorgehäuses die Referenzdruckkammer an ihrem Kragen festlegt. Die thermisches Entkopplung der Referenzdruckkammer von metallischen Sensorgehäuse läßt sich in Vorteilhafter Weise dadurch noch verbessern, daß in Höhe des Kragens der Referenzdruckkammer das Sensorgehäuse an seiner Innenwandung mit einer den Ringspalt vergrößernden Ringnut versehen ist. Ein weiterer Vorteil im Hinblick auf die spannungsfreie Befestigung der Schaltmembran wird dadurch erzielt, daß die Schaltmembran auf einen ebenen, gegenüber dem Kragen axial vorstehenden Flansch am vorderen Ende der Referenzdruckkammer flach aufliegt und an ihrer äußeren Stirnseite mit dem Flansch ringsum verschweißt ist.

Zeichnung

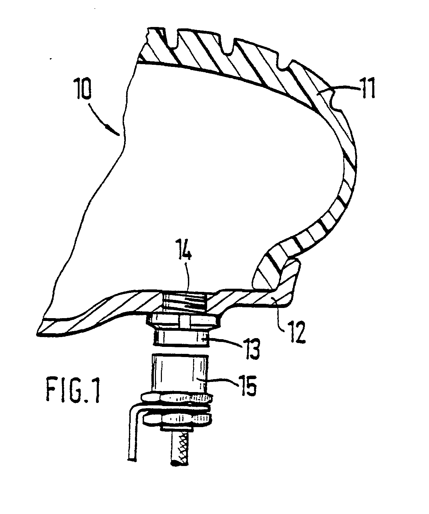

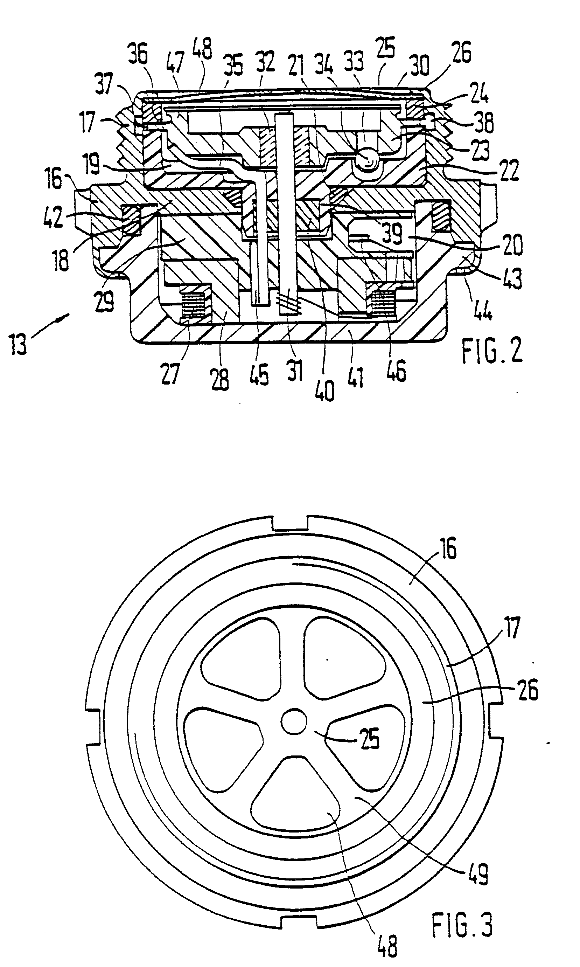

Ein Ausführungsbeispiel der Erfindung ist in der Zeichnung dargestellt und in der nachfolgenden Beschreibung näher erläutert. Es zeigen Figur 1 einen Ausschnitt eines Fahrzeugrades mit dem erfindungsgemäßen Reifendrucksensor und den ihm zugeordneten Signalaufnehmer, Figur 2 den erfindungsgemäßen Reifendrucksensor in vergrößerter Darstellung im Querschnitt und Figur 3 den Reifendrucksensor aus Figur 2 in der Draufsicht.

Beschreibung des Ausführungsbeispieles

In Figur 1 ist ein Ausschnitt eines Kraftfahrzeugrades in verkleinertem Maßstab im Querschnitt dargestellt und mit 10 bezeichnet. Es zeigt einen Reifen 11, der auf einer Radfelge 12 befestigt ist. An einem nach innen gerichteten Abschnitt der Radfelge 12 ist ein Reifendrucksensor 13 in einer Gewindebohrung 14 der Radfelge 12 eingeschraubt. In geringem Abstand dazu ist im Bereich des Reifendrucksensors 13 an der nicht dargestellten Radaufhängung des Fahrzeugs ein Signalaufnehmer 15 befestigt, dessen Stirnseite zum Reifendrucksensor 13 hin gerichtet ist und bei jeder Umdrehung des Fahrzeugrades 10 eine hochfrequente Schwingung in den Reifendrucksensor 13 einkoppelt.

Der Aufbau des Reifendrucksensors 13 ist in Figur 2 im Querschnitt dargestellt. Er hat ein aus Stahl oder Aluminium hergestelltes Sensorgehäuse 16, das mit einem Gewindeansatz 17 zur Befestigung an der Radfelge 12 versehen ist. Das Sensorgehäuse 16 ist nach vorn zum Reifen 11 hin offen. Im mittleren Bereich des Sensorgehäuses 16 befindet sich innen eine breite Ringschulter 18, durch welche das Sensorgehäuse 16 in eine nach vorn geöffnete Gehäusekammer 19 und eine dahinterliegende Schwingkreiskammer 20 geteilt ist. In die Gehäusekammer 19 ist am Innenrand der Ringschulter 18 ein Dichtring 21, darauf ein Tragring 22 aus Kunststoff, eine Referenzdruckkammer 23 aus Stahl, ein Abstandsring 24 aus Faserkunststoff und eine durchbrochene Abdeckscheibe 25 eingesetzt und durch einen Bördelrand 26 an der vorderen Stirnseite des Sensorgehäuses 16 festgespannt. Die Schwingkreiskammer 20 unterhalb der Ringschulter 19 des Sensorgehäuses 16 enthält eine Ringspule 27, einen Ferritkern 28, einen Aufnahmekörper 29 aus Kunststoff und einen nicht erkennbaren, darin eingesetzten Kondensator.

Die Referenzdruckkammer 23 ist zur Druckluft im Reifen 11 hin durch eine flache Schaltmembran 30 abgeschlossen. In der Mitte der Referenzdruckkammer 23 ist ein Kontaktstift 31 mit einer Glasdurchführung 32 druckdicht und elektrisch isoliert in der Referenzdruckkammer 21 befestigt. Über einen Einfüllkanal 33 wird Luft oder Stickstoff in die Referenzdruckkammer 23 mit dem erforderlichen Referenzdruck eingefüllt und anschließend der Einfüllkanal 33 durch eine darin eingepreßte bzw. damit verschweißte Kugel 34 druckdicht verschlossen. Schließlich ist noch ein Anschlußdraht 35 mit einem Ende an den Referenzdruckkammer 23 festgeschweißt. Schaltmembran 30 und Kontaktstift 31 sind zueinander so angeordnet, daß bei ausreichendem Luftdruck im Reifen 11 zwischen ihnen eine elektrische Verbindung besteht, durch der aus der Ringspule 27 und dem nicht erkennbaren Kondensator bestehende Schwingkreis geschlossen wird. Fällt dagegen der Luftdruck im Reifen unter den Referenzdruck in der Referenzdruckkammer 23, so hebt die Schaltmembran 30 vom Kontaktstift 31 ab und unterbricht den Schwingkreis, was durch die hochfrequente Schwingung vom Signalaufnehmer 15 detektiert wird.

Um eine thermische Abkopplung der Referenzdruckkammer 23 vom metallischen Sensorgehäuse 16 bzw. von der Radfelge 12 zu erreichen, ist die Referenzdruckkammer 23 mit einem am Außenumfang angeformten radialen Kragen 36 zwischen dem Traging 22 und dem Abstandsring 24 aus Isolierstoff im Sensorgehäuse 16 axial eingespannt. Dabei liegt zwischen dem Kragen 36 und der Innenwandung des Sensorgehäuses 16 ein Ringspalt 37. Zur Verbessung der thermischen Entkopplung ist das Sensorgehäuse 16 in Höhe des Kragens 36 der Referenzdruckkammer 23 an ihrer Innenwandung mit einer den Ringspalt 37 vergrößernden Ringnut 38 versehen. Da der aus Kunststoff hergestellte Traging 22 sowie der Abstandsring 24 bei mechanischer Belastung zum Kaltfluß neigt und somit die Bördelung im Laufe der Zeit sich lockern könnte, ist der zur Abdichtung der Gehäusekammer zur Schwingkreiskammer 20 vorgesehene Dichtring 21 am Innenrand der Ringschulter 18 so ausgebildet, daß er gleichzeitig als Federelement wirkend den Traging 22, die Referenzdruckkammer 23 mit ihrem Kragen 36, den Abstandsring 24 sowie die Abdeckscheibe 25 unter Vorspannung gegen den Bördelrand 26 an der vorderen Öffnung des Sensorgehäuses 16 drückt. Dabei faßt der Dichtring 21 einen durch die Öffnung der Ringschulter 18 ragenden Ansatz 39 des Tragrings 22 ein. Durch diesen Ansatz 39 ist der Kontaktstift 31 und der Anschlußdraht 35 hindurchgeführt und darin mit einer Dichtmasse 40 zur Schwingkreiskammer 20 hin abgedichtet. Durch den Dichtring 21 und die Dichtmasse 40 sind die elektrischen Anschlüsse der Ringspule 27, des Kondensators, des Kontaktiftes 31 und des Anschlußdrahtes 35 gegen die agressive, korrosionsfördernde Reifenluft geschützt. Eine Kunststoffkappe 41 schließt die Schwingkreiskammer 20 nach außen hin ab, indem sie mit einem weiteren Dichtring 42 am unteren Ende des Sensorgehäuses 16 aufliegt und an einer Ringschulter 43 durch eine Bördelung 44 am Sensorgehäuse 16 befestigt ist. Der Anschlußdraht 35 ist mit seinem äußeren Ende mit einem Anschluß 45 des nicht erkennbaren Kondensators kontaktiert, dessen anderer Anschluß 46 mit einem Ende der Ringspule 27 verbunden ist. Das andere Ende der Ringspule 27 ist schließlich mit dem freien Ende des Kontaktstiftes 31 verbunden.

Die Referenzdruckkammer 23 ist im Reifendrucksensor 13 so anzuordnen, daß sie einerseits gegenüber dem metallischen Sensorgehäuse 16 thermisch entkoppel ist und andererseits an der Schaltmembran 30 keine mechanischen Spannungen verursacht. Zudem soll sie über die Schaltmembran 30 möglichst gut thermische an die Reifenluft angekoppelt sein, damit die Temperatur des Gases in der Referenzdruckkammer 23 mit der Temperatur der Reifenluft übereinstimmt. Zu diesem Zweck ist die Schaltmembran 30 auf einen ebenen, gegenüber dem Kragen 36 der Referenzdruckkammer 23 axial vorstehenden Flansch 47 am vorderen Ende der Referenzdruckkammer 23 flach aufgelegt und an ihrer radialen Stirnseite mit dem Flansch 47 ringsum druckdicht und spannungsfrei verschweißt.

Gemäß Figur 3 ist erkennbar, daß die Schaltmembran 30 von der Abdeckscheibe 25 überdeckt ist. Mit dieser Abdeckscheibe 35 soll erreicht werden, daß die im Betrieb am Reifendrucksensor 13 vorbeiströmende Reifenluft verwirbelt wird, damit der Wärmeübergang auf die Schaltmembran 30 und damit auf die Referenzdruckkammer 23 möglichst optimal ist. Zu diesem Zweck ist die vor der Schaltmembran 30 liegende Abdeckscheibe 25 mit nebeneinander angeordneten, segmentförmigen Öffnungen 48 versehen. Die zwischen den Öffnungen 48 verbleibenden Stege 49 bewirken die gewünschte Luftverwirbelung bei gleichzeitig großem Luftdurchströmquerschnitt durch die Öffnungen 48. Sie verbessern damit den Wärmeübergang von der Reifenluft auf die Referenzdruckkammer 23. Die Abdeckscheibe 25 schützt außerdem die Schaltmembran 30 gegen Beschädigung durch größere Teile im Reifen 11, die sich gelegentlich von der Felge lösen bzw. durch umsachgemäße Behandlung vor dem Einbau des Reifendrucksensors 13 oder beim Montieren des Reifens dorthin gelangt sind.

## Patentansprüche

1. Reifendrucksensor für Kraftfahrzeuge mit einem am Umfang einer Radfelge zu befestigenden, vom Luftdruck im Reifen zu betätigenden Druckschalter zur Reifendrucküberwachung, der eine Referenzdruckkammer aufweist, welche zum Reifen hin durch eine elektrisch leitende Schaltmembran abgeschlossen ist und einen mit der Schaltmembran zusammenwirkenden Kontaktstift trägt, welcher ebenso wie die Schaltmembran mit einem elektrischen Schwingkreis verbunden ist, und mit einem Sensorgehäuse, in dem die Referenzdruckkammer gegenüber der Radfelge thermisch isoliert aufgenommen ist, dadurch gekennzeichnet, daß die Referenzdruckkammer (23) mit einem an ihrem Außenumfang angeformten radialen Kragen (36) zwischen einem Tragring (22) und einem Abstandsring (24) aus Isolierstoff im metalischen Sensorgehäuse (16) axial eingespannt ist, wobei zwischen dem Kragen (36) und der Innenwandung des Sensorgehäuses (16) ein Ringspalt (37) angeordnet ist.

2. Reifendrucksensor nach Anspruch 1, dadurch gekennzeichnet, daß der Traging (22) über einen elastischen Dichtring (21) auf einer im Sensorgehäuse (16) angeformeten Ringschulter (18) aufliegt und der Abstandsring (24) mit einer Abdeckscheibe (25) durch einen Bördelrand (26) an der vorderen Öffnung des Sensorgehäuses (16) die Referenzdruckkammer (23) an ihrem Kragen (36) festlegt.

3. Reifendrucksensor nach Anspruch 1, dadurch gekennzeichnet, daß das Sensorgehäuse (16) in Höhe des Kragens (36) der Referenzdruckkammer (23) an seiner Innenwandung mit einer den Ringspalt (37) vergrößernden Ringnut (38) versehen ist.

4. Reifendrucksensor nach Anspruch 1, dadurch gekennzeichnet, daß die Schaltmembran (30) auf einem ebenen, gegenüber dem Kragen (36) axial vorstehenden Flansch (47) am vorderen Ende der Referenzdruckkammer (23) flach aufliegt und an ihrer radialen Stirnseite mit dem Flansch (47) ringsum verschweißt ist.

5. Reifendrucksensor nach Anspruch 2, dadurch gekennzeichnet, daß die vor der Schaltmembran (30) liegende Abdeckscheibe (25) mit nebeneinander angeordneten, segmentförmigen Öffnungen (48) versehen ist.

6. Reifendrucksensor nach Anspruch 2, dadurch gekennzeichnet, daß der Dichtring (21) einen durch die Öffnung der Ringschulter (18) des Sensorgehäuses (16) ragenden Ansatz (39) des Tragringes (22) einfaßt, durch den der Kontaktstift (31) sowie ein Anschlußdraht (35) der Referenzdruckkammer (23) hindurch in eine Schwingkreiskammer (20) ragen, in der eine Ringspule (27) mit einem Kondensator und mit dem Druckschalter der Referenzdruckkammer (23) zu einen Schwingkreis geschaltet sind.

7. Reifendrucksensor nach Anspruch 6, dadurch gekennzeichnet, daß mittels Dichtung (21) und Dichtmasse (40) im Ansatz (39) des Tragringes (22) die elektrischen Anschlüsse von Ringspule (27), Kondensator und Kontaktstift (31) gegen die Reifenluft geschützt sind.

## Claims

1. Detector of the inflation pressure of motor vehicle tyres having a pressure switch to be fastened to the circumference of a wheel rim and to be activated by the air pressure in the tyre in order to monitor the tyre pressure, which exhibits a reference pressure chamber which is closed towards the tyre by an electrically conductive switching membrane and carries a contact pin which cooperates with the switching membrane, which like the switching membrane is connected to an electrical oscillation circuit, and with a detector housing in which the reference pressure chamber is received thermally insulated relative to the wheel rim, characterized in that the reference pressure chamber (23) is clamped axially in the metallic detector housing (16) by its radial collar (36) formed on its outer circumference between a support ring (22) and a distance ring (24) made of insulating material, an annular gap (37) being arranged between the collar (36) and the inner wall of the detector housing (16).

2. Detector of the inflation pressure of tyres according to Claim 1, characterized in that the support ring (22) rests through a resilient sealing ring (21) on an annular shoulder (18) formed in the detector housing (16) and the distance ring (24) anchors the reference pressure chamber (23) at its collar (36) by a flanged rim (26) on the front aperture of the detector housing (16).

3. Detector of the inflation pressure of tyres according to Claim 1, characterized in that the detector housing (16) is provided with an annular groove (38) which enlarges the annular gap (37) on its inner wall at the height of the collar (36) of the reference pressure chamber (23).

4. Detector of the inflation pressure of tyres according to Claim 1, characterized in that the switching membrane (30) rests flat on a plane flange (47) projecting axially relative to the collar (36) at the front end of the reference pressure chamber (23) and is welded to the flange (47) all round at its radial end face.

5. Detector of the inflation pressure of tyres according to Claim 2, characterized in that the cover disc (25) located in front of the switching membrane (30) is provided with segmental apertures (48) arranged juxtaposed.

6. Detector of the inflation pressure of tyres according to Claim 2, characterized in that a sealing ring (21) frames a lug (39) of the support ring (22) which projects through the aperture of the annular shoulder (18) of the detector housing (16), through which the contact pin (31) and a terminal wire (35) project through the reference pressure chamber (23) into an oscillation circuit chamber (20) in which a solenoid (27) is wired with a capacitor and with the pressure switch of the reference pressure chamber (23) to form an oscillation circuit.

7. Detector of the inflation pressure of tyres according to Claim 6, characterized in that the electrical connections of solenoid (27), capacitor and contact pin (31) are protected from the tyre air by means of a sealing element (21) and sealing compound (40) in the lug (39) of the support ring (22).

**Revendications**

1. Détecteur de la pression des pneus pour véhicules, avec un interrupteur manométrique pour la surveillance de la pression du pneu, à fixer sur la périphérie d'une jante de roue et à commander par l'air sous pression dans le pneu, qui présente une chambre de pression de référence, isolée du pneu par une membrane de commutation conductrice de l'électricité et qui porte pour agir de concert avec la membrane de commutation une fiche de contact, laquelle est reliée de même que la membrane de commutation à un circuit électrique oscillant, et avec un boîtier de détecteur, dans lequel la chambre de pression de référence est admise isolée thermiquement vis-à-vis de la jante de la roue, caractérisé en ce que la chambre de pression de référence (23) est fixée axialement dans le boîtier de détecteur (16) métallique par une collerette radiale (36) formée sur sa circonférence extérieure et serrée entre un anneau porteur (22) et un anneau distanciateur (24) en matériau isolant, là où est aménagé entre la collerette (36) et la paroi intérieure du boîtier de détecteur (16) un espace d'air (37).

2. Détecteur de la pression des pneus selon la revendication 1, caractérisé en ce que l'anneau porteur (22) s'appuye par un anneau d'étanchéité (21) élastique sur un épaulement annulaire (18) créé dans le boîtier de détecteur et l'anneau distanciateur (24) avec un plateau de recouvrement (25) bloqué grâce à un bord replié (26) sur l'ouverture avant du détecteur de pression (16), la chambre de référence de pression (23) sur sa collerette (36).

3. Détecteur de pression des pneus selon la revendication 1, caractérisé en ce que le boîtier de détecteur (16) est pourvu, sur la hauteur de la collerette (36) de la chambre de pression de référence (23), contre sa paroi intérieure, d'une rainure annulaire (38) agrandissant l'espace annulaire (37).

4. Détecteur de pression des pneus selon la revendication 1, caractérisé en ce que la membrane de commutation (30) s'appuie à plat dans la partie antérieure de la chambre de pression de référence (23) sur un rebord (47) plan, surplombant axialement la collerette (36) et est fixée par soudure sur sa face avant radiale tout autour du rebord (47).

5. Détecteur de pression des pneus selon la revendication 2, caractérisé en ce que la plaque de recouvrement (25) située devant la membrane de commutation (30) est munie d'ouvertures (48) en forme de segments, placés les uns à côté des autres.

6. Détecteur de pression des pneus selon la revendication 2, caractérisé en ce que l'anneau d'étanchéité (21) entoure un prolongement (39) de l'anneau porteur (22) passant à travers l'ouverture de l'épaulement annulaire (22) du boîtier de détecteur (16) et à travers lequel la fiche de contact (31) ainsi qu'un fil de raccord (35) de la chambre de pression de référence (23) débouchent dans une chambre de circuit oscillant (20), dans laquelle une bobine torique (27) avec un condensateur et avec l'interrupteur manométrique de la chambre de pression de référence (23) sont reliés à un circuit oscillant.

7. Détecteur de pression des pneus selon la revendication 6, caractérisé en ce que, au moyen de la garniture d'étanchéité (21) et de la masse étanche (40) dans le prolongement (39) de l'anneau porteur (22), les branchements électriques de la bobine torique (27), du condensateur et de la fiche de contact (31) sont protégés contre l'air des pneus.

FIG.1

FIG.2

FIG.3